# EUROPÄISCHE PATENTANMELDUNG

(11) **EP 3 782 941 A1**
(43) Veröffentlichungstag der Anmeldung: **24.02.2021**
(21) Anmeldenummer: 19192676.5
(22) Anmeldetag: 20.08.2019
(51) Int. Cl.: B65G 47/91, B66C 1/02, B25J 15/06, G01G 19/18

(54) **VERFAHREN ZUM BETREIBEN EINER HEBEVORRICHTUNG SOWIE HEBEVORRICHTUNG**

(71) Anmelder: J. Schmalz GmbH, 72293 Glatten (DE)
(72) Erfinder: Heinzmann, Bernd, 72290 Loßburg (DE); Kohler, Jonathan, 72296 Schopfloch (DE)
(74) Vertreter: DREISS Patentanwälte PartG mbB

(57) **Zusammenfassung**

Die Erfindung betrifft ein Verfahren zum Betreiben einer Hebevorrichtung (2) umfassend eine manuell führbare Handhabungseinrichtung (4), mittels derer ein anzuhebender Gegenstand (6) an einer Ansaugseite der Handhabungseinrichtung (4) ansaugbar oder in sonstiger Weise, insbesondere durch pneumatisch betätigte Mittel greifbar ist, wobei die Handhabungseinrichtung (4) über eine Hebeeinrichtung (14) mit einem Tragstrang (12) anhebbar und absenkbar ist, wobei wahlweise Unterdruck oder pneumatischer Überdruck zu der Handhabungseinrichtung (4) zuführbar ist, wobei der Unterdruck oder der pneumatische Überdruck innerhalb der Handhabungseinrichtung (4) der Hebevorrichtung (2) in ein und derselben Leitung (22) geführt wird, wobei bei der Handhabungseinrichtung (4) ein Kraftsensor (18) verwendet wird, insbesondere um eine Belastung des Tragstrangs (12) und/oder der Handhabungseinrichtung (4) insbesondere beim Anheben und Absenken eines Gegenstands (6) zu ermitteln. Es wird eine Verspannung der besagten Leitung (22) infolge von Zuführung von pneumatischem Überdruck und deren Auswirkung auf ein Signal des Kraftsensors (18) berücksichtigt, indem ein Korrekturwert (Fkor) für ein Signal (Fsens) des Kraftsensors (18) ermittelt wird und das Signal (Fsens) des Kraftsensors (18) um diesen Korrekturwert (Fkor) korrigiert wird, so dass ein korrigiertes Signal (Fsens-kor) erhalten und der weiteren Steuerung des Betriebs zugrunde gelegt wird.

## Beschreibung

Die Erfindung betrifft ein Verfahren zum Betreiben einer Hebevorrichtung, wobei die Hebevorrichtung eine manuell führbare Handhabungseinrichtung umfasst, mittels derer ein anzuhebender Gegenstand an einer Ansaugseite der Handhabungseinrichtung ansaugbar oder in sonstiger Weise, insbesondere durch pneumatisch betätigte Mittel greifbar ist.

Die betroffenen Hebevorrichtungen finden z.B. in manuell geführten Krananlagen Verwendung. Dabei ist die Handhabungseinrichtung über eine Hebeeinrichtung mit einem Tragstrang (Seil, Kette, Band, oder Ähnliches, oder auch ein in seiner Länge variierbarer Aktor) anhebbar und absenkbar, so dass ein gehaltener Gegenstand anhebbar und insbesondere translatorisch verbringbar und wieder absenkbar und ablösbar. Die Haltemittel zum Halten bzw. Greifen des Gegenstandes sind insbesondere pneumatisch betreibbar, z.B. in der Art eines Sauggreifers. Für einen Sauggreifer kann z.B. eine Druckluftbetriebene Unterdruckerzeugervorrichtung in der Art eines Ejektors vorgesehen sein, die vorzugsweise ebenfalls an der Handhabungseinrichtung angeordnet ist. Denkbar sind auch andere Greiforgane, die z.B. mit Druckluft betrieben werden. Insofern ist der Handhabungsvorrichtung ein pneumatischer Überdruck oder, je nach Ausgestaltung, wahlweise Unterdruck oder pneumatischer Überdruck zuführbar. Es ist insofern eine Leitung vorgesehen, in welcher zumindest zeitweise in Überdruck geführt wird. Denkbar ist auch, dass pneumatische der Unterdruck oder der pneumatische Überdruck innerhalb der Handhabungseinrichtung der Hebevorrichtung je nach Bedarf in ein und derselben Leitung geführt werden kann.

Zur Überwachung der Vorrichtung ist es bekannt, bei derartigen Handhabungseinrichtungen einen Kraftsensor vorzusehen. Dieser dient insbesondere dazu, eine Belastung des Tragstrangs und/oder der Handhabungseinrichtung insbesondere beim Anheben und Absenken eines Gegenstands zu erfassen.

Die manuell führbare und bedienbare Handhabungseinrichtung der Hebevorrichtung kann also für die Bedienung der Vorrichtung zumindest zeitweise mit Überdruck versorgt und betrieben werden (oder auch wahlweise mit Unterdruck für Unterdruckanwendungen oder mit pneumatischem Überdruck für Druckluftanwendungen). Um einen ausreichend hohen Volumenstrom bei Unterdruckanwendungen zu ermöglichen, kann die Leitung bei der Handhabungseinrichtung zur Führung von Unterdruck oder pneumatischem Überdruck nicht mit beliebig kleinem Querschnitt bereitgestellt werden. Durch die konstruktiv bedingte Auslegung dieser Leitung kann sich das Problem stellen, dass die Leitung bei Beaufschlagung mit pneumatischem Überdruck, beispielsweise im Bereich von 1 bis 15 bar, insbesondere 4 bis 10 bar, verspannt wird, das heißt, es kann sich eine Ausdehnung, eine Verwindung und/oder eine Längung dieser Leitung ergeben.

Eine überdruckbedingte Verformung der Leitung kann sich auf den Kraftsensor übertragen und das von dem Kraftsensor ermittelte und für Steuerungszwecke bereitgestellte Sensorsignal verfälschen. Insbesondere kann der Kraftsensor eine nicht korrekte Gewichtskraft ermitteln. In der Folge wird also beispielsweise eine Zug- oder Belastungskraft innerhalb des Tragmittels nicht korrekt angegeben, mit der Folge, dass das Anheben und Absenken mittels der Hebeeinrichtung langsamer als beabsichtigt erfolgt, oder dass maximale Traglasten fälschlicherweise oder nur scheinbar überschritten werden, was ungewollte Steuerungsmaßnahmen auslösen kann. Insbesondere kann es sich ergeben, dass ein Ablegen des Werkstücks nicht möglich ist, weil eine Entlastung der Handhabungseinrichtung oder des Tragstrangs bei Bodenkontakt eines abzusetzenden Gegenstands nicht oder nicht korrekt erkannt werden kann.

Der vorliegenden Erfindung liegt die Aufgabe zugrunde, einen zuverlässigeren Betrieb der Hebevorrichtung zu ermöglichen.

Diese Aufgabe wird bei einem Verfahren der genannten Art erfindungsgemäß dadurch gelöst, dass eine Verspannung der besagten Leitung infolge von Zuführung von pneumatischem Überdruck und deren Auswirkung auf ein Signal des Kraftsensors berücksichtigt wird, indem ein Korrekturwert (Fkor) für ein Signal (Fsens) des Kraftsensors ermittelt wird und das Signal (Fsens) des Kraftsensors um diesen Korrekturwert (Fkor) korrigiert wird, so dass ein korrigiertes Signal (Fsens-kor) erhalten und der weiteren Steuerung des Betriebs zugrunde gelegt wird.

Durch die erfindungsgemäße Berücksichtigung einer Verspannung der besagten Leitung und hierdurch bedingt einer Verspannung der Handhabungseinrichtung und/oder des Kraftsensors, dahingehend, dass das Signal des Kraftsensors um den ermittelten Korrekturwert korrigiert wird, können den vorstehend geschilderten Nachteilen entgegengewirkt werden.

Die Ermittlung des Korrekturwerts und die Korrektur des Signals des Kraftsensors um diesen Korrekturwert können softwaremäßig innerhalb der elektrischen oder elektronischen Steuereinrichtung realisiert werden. Sie können aber auch hardwaretechnisch durch Schaltungen mittels elektrischer und/oder elektronischer Bauelemente erfolgen.

Es erweist sich als vorteilhaft, wenn der Korrekturwert ermittelt wird, indem ein Verspannungsparameter ermittelt wird, welcher in die Ermittlung des Korrekturwerts eingeht. Dieser Verspannungsparameter kann beispielsweise unter Verwendung eines Sensors zur Ermittlung einer hiermit in Verbindung stehenden physikalischen Größe ermittelt werden. Hierfür kommt insbesondere die Verwendung eines Dehnungssensors, eines Verwindungssensors oder eines Winkelsensors in Frage. Der hierfür verwendete Sensor ist insbesondere separat von dem Kraftsensor.

Es erweist sich weiter als vorteilhaft, wenn der Verspannungsparameter ein im Inneren der besagten Leitung herrschender Druck ist. Auf diese Weise kann aus dem ermittelten Druck auf eine Verspannung und auf die Größe dieser Verspannung für die Zwecke der Ermittlung des Korrekturwerts geschlossen werden.

Es wäre insbesondere denkbar, dass verschiedene Bereiche des Verspannungsparameters zugrundegelegt werden, wobei den Bereichen jeweils eine Korrekturgröße oder ein Korrekturwert herstellertechnisch oder durch Anfertigen einer Messreihe auf Herstellerseite oder Benutzerseite zugeordnet wird.

Bei einer bevorzugten Ausführungsform des erfindungsgemäßen Verfahrens erweist es sich als vorteilhaft, dass der Korrekturwert ermittelt wird aus dem Produkt des im Inneren der besagten Leitung herrschenden Drucks p und aus einem für eine betreffende Vorrichtung festgelegten oder festlegbaren Korrekturfaktor f.

Weiter erweist es sich als vorteilhaft, dass der Korrekturwert ermittelt wird aus dem Produkt des im Inneren der besagten Leitung herrschenden Drucks p und aus der Querschnittsfläche A der besagten Leitung und aus einem für eine betreffende Vorrichtung festgelegten oder festlegbaren Korrekturfaktor f.

Eine hier in Rede stehende Hebevorrichtung kann dahingehend ausgebildet sein, dass der Kraftsensor zwischen einer oberen Schnittstelle der Handhabungseinrichtung zu dem Tragstrang und einer dem anzuhebenden Gegenstand zugewandten Greif- oder Ansaugbasis der Handhabungseinrichtung angeordnet ist und wobei die besagte Leitung ebenfalls zwischen der oberen Schnittstelle und der Greif- oder Ansaugbasis der Handhabungseinrichtung verläuft. In diesem Fall erweist sich die Ausführung des erfindungsgemäßen Verfahrens als besonders vorteilhaft, weil hier der Kraftsensor und die besagte Leitung gewissermaßen parallel zueinander verlaufen und an ihren beidseitigen Enden auf die vorerwähnte Schnittstelle zum Tragstrang einerseits, bzw. zu der Greif- oder Ansaugbasis der Handhabungseinrichtung andererseits nach Art eines Hebelwerks eine Beeinflussung des Kraftsensors bewirken, die auf die erfindungsgemäße Weise beseitigt oder weitgehend reduziert werden kann.

Dies erweist sich weiter als besonders vorteilhaft, wenn der Kraftsensor als lasttragendes Glied bei der Hebevorrichtung verwendet und angeordnet wird. Denkbar ist, dass der Kraftsensor eine Kraftübertragung von einer Greif- oder Ansaugbasis der Vorrichtung zum Tragstrang bildet.

Gegenstand der Erfindung ist auch eine Hebevorrichtung zur Durchführung des erfindungsgemäßen Verfahrens mit den Merkmalen des Anspruchs 8. Dabei ist die Steuereinrichtung ausgebildet, um eine Verspannung der besagten Leitung infolge von Zuführung von pneumatischem Überdruck und deren Auswirkung auf ein Signal des Kraftsensors zu berücksichtigen, indem ein Korrekturwert (Fkor) für ein Signal (Fsens) des Kraftsensors ermittelt und das Signal (Fsens) des Kraftsensors um diesen Korrekturwert (Fkor) korrigiert wird, so dass ein korrigiertes Signal (Fsens-kor) erhalten und der weiteren Steuerung des Betriebs zugrunde gelegt wird.

Weiter kann in vorteilhafter Weise vorgesehen sein, dass der Kraftsensor ein lasttragendes Glied bildet und zwischen einer oberen Schnittstelle der Handhabungseinrichtung zu dem Tragstrang und einer dem anzuhebenden Gegenstand zugewandten Greif- oder Ansaugbasis der Handhabungseinrichtung angeordnet ist und dass die besagte Leitung ebenfalls zwischen der oberen Schnittstelle und der Greif- oder Ansaugbasis der Handhabungseinrichtung verläuft.

Nach einer bevorzugten Ausführungsform der erfindungsgemäßen Hebevorrichtung ist vorgesehen, dass die besagte Leitung einen Innendurchmesser von wenigstens 10 mm, insbesondere wenigstens 12 mm, insbesondere wenigstens 14 mm, und weiter insbesondere wenigstens 16 mm aufweist.

Eine weitere bevorzugte Ausführungsform der erfindungsgemäßen Hebevorrichtung ist gekennzeichnet durch einen mit der Steuereinrichtung zusammenwirkenden Sensor zur Ermittlung eines Verspannungsparameters bei der besagten Leitung oder bei Komponenten der Handhabungseinrichtung jeweils infolge von Zuführung von pneumatischem Überdruck zu der besagten Leitung.

Wie eingangs erwähnt, kann es sich bei dem Verspannungsparameter um einen Parameter zur Ermittlung einer die Verspannung, d.h. die Dehnung, Verwindung oder sonstige Verformung der besagten Leitung und/oder der Handhabungseinrichtung beeinflussenden Parameter handeln, wobei wiederum vorzugsweise der in der besagten Leitung herrschende Druck als Verspannungsparameter berücksichtigt wird. Vorteilhafterweise ist ein mit der Steuereinrichtung zusammenwirkender Drucksensor zur Ermittlung eines Drucks im Inneren der besagten Leitung vorgesehen.

Bei der hier in Rede stehenden Hebevorrichtung erweist es sich als vorteilhaft, dass deren Handhabungseinrichtung ein manuell bedienbares Betätigungsorgan, insbesondere bei einem manuell greifbaren Handgriff der Handhabungseinrichtung, aufweist, um Steuerungsmaßnahmen vornehmen zu können. Mittels dieses Betätigungsorgans können Steuerbefehle durch eine Bedienperson ausgeführt werden, also die Zuführung von Unterdruck bzw. die Zuführung von pneumatischem Überdruck ausgelöst werden. Weiter kann mittels des Betätigungsorgans ein Anheben oder Absenken der Handhabungseinrichtung durch Ansteuerung der Hebeeinrichtung ausgelöst werden.

Es sei auch erwähnt, dass der Betrieb der Hebeeinrichtung unter Verwendung eines Signals des genannten Kraftsensors ausgelöst oder unterstützt werden kann, dahingehend, dass eine durch eine Bedienperson auf die manuell führbare Handhabungseinrichtung ausgelöste verhältnismäßig geringfügige Führungskraft in die eine oder andere Richtung (Anheben, Absenken, translatorisch Verfahren) von dem Kraftsensor erfasst und mittels der Steuereinrichtung in Steuerbefehle an die Hebeeinrichtung oder eine zusätzliche translatorische Verfahreinrichtung umgesetzt wird. Auch in diesem Fall erweist sich die Zurverfügungstellung eines möglichst unverfälschten Sensorsignals des Kraftsensors als besonders vorteilhaft.

Weitere Merkmale, Einzelheiten und Vorteile der Erfindung ergeben sich aus den beigefügten Patentansprüchen, aus der zeichnerischen Darstellung und nachfolgenden Beschreibungen.

In der Zeichnung zeigt:
- Figur 1: eine weitestgehend schematische Darstellung einer manuell führbaren Handhabungseinrichtung einer erfindungsgemäßen Hebevorrichtung mit angedeutetem Tragstrang und angedeuteter Hebeeinrichtung; und
- Figur 2: eine Seitenansicht einer manuell führbaren Handhabungseinrichtung einer erfindungsgemäßen Hebevorrichtung.

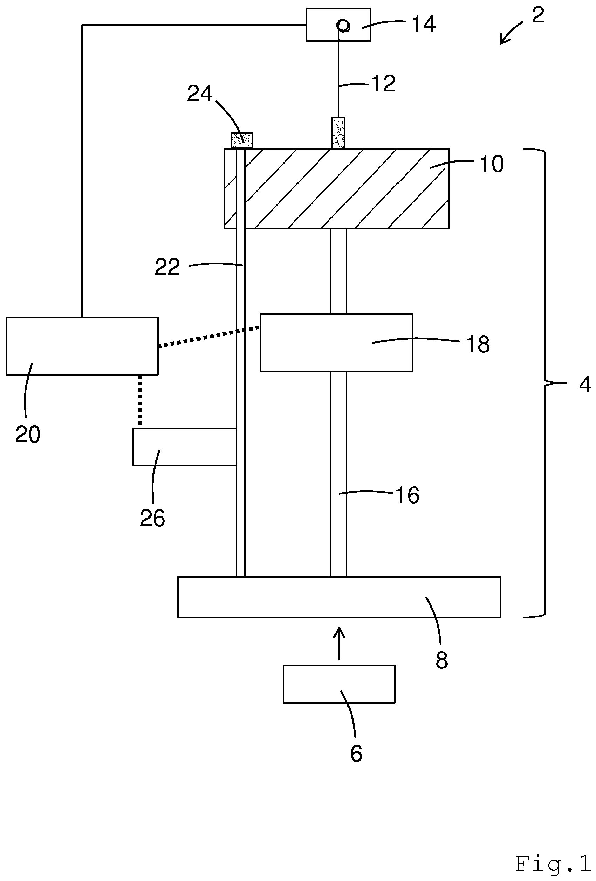

Figur 1 zeigt in schematischer Darstellung eine insgesamt mit dem Bezugszeichen 2 bezeichnete erfindungsgemäße Hebevorrichtung. Die Hebevorrichtung 2 umfasst eine manuell führbare Handhabungseinrichtung 4, mittels derer ein anzuhebender und gegebenenfalls translatorisch zu verbringender und wieder abzusetzender Gegenstand 6 an einer typischerweise vertikal unteren Greif- oder Ansaugbasis 8 lösbar fixierbar ist. Die Handhabungseinrichtung 4 umfasst typischerweise an ihrer oberen Seite eine Schnittstelle 10 zu einem Tragstrang 12 einer Hebeeinrichtung 14. Mittels dieser Hebeeinrichtung 14 und dem Tragstrang 12 ist die Handhabungseinrichtung 4 heb- und senkbar und gegebenenfalls durch geeignete nicht dargestellte Aufhängungsmittel bei der Hebeeinrichtung translatorisch verbringbar. Die Hebeeinrichtung 14 kann z.B. eine Windeneinrichtung zu bedarfsgerechten einziehen und freigeben des Tragstrangs 12 sein.

Zwischen der Schnittstelle 10 zu dem Tragstrang 12 und der Greif- oder Ansaugbasis 8 ist eine lasttragende Verbindung 16 vorgesehen und in Figur 1 schematisch und beispielhaft in Verlängerung des Tragstrangs 12 und in linearer Erstreckung dargestellt. Innerhalb dieser lasttragenden Verbindung 16 kann ein Kraftsensor 18 gewissermaßen als Kettenglied der lasttragenden Verbindung 16 vorgesehen sein, so wie dies beispielhaft angedeutet ist. In diesem beispielhaft angedeuteten Fall trägt oder ermittelt der Kraftsensor 18 insbesondere wenigstens nahezu die Gewichtskraft des lösbar ergriffenen Gegenstands 6, was jedoch rein beispielhaft ist. Der Kraftsensor 18 könnte auch derart ausgebildet und bei der Handhabungseinrichtung 4 angeordnet sein, dass er nur einen Teil dieser Last trägt oder ermittelt. Ein Signal dieses Kraftsensors 18 wird an eine Steuereinrichtung 20 der Hebevorrichtung gegeben, mittels derer der Betrieb der Hebevorrichtung ausführbar ist.

Bei der erfindungsgemäßen Hebevorrichtung 2 ist weiter eine Leitung 22 für wahlweise Unterdruck oder pneumatischen Überdruck vorgesehen, die sich von der tragstrangseitigen Schnittstelle 10 zu der Greif- oder Ansaugbasis 8 erstreckt und mit nicht dargestellten Steuerorganen, wie Ventilen, Klappen und Anschlüssen, mit Komponenten der Handhabungseinrichtung 4 zusammenwirkt und in Strömungsverbindung steht. Diese Leitung 22 weist im Bereich der Schnittstelle 10 einen Anschluss 24 für ein Unterdruck- oder pneumatischen Überdruck heranführendes nicht dargestelltes Leitungsmittel auf. Dieses nicht dargestellte Leitungsmittel könnte auch getrennte Zuführmittel für Unterdruck bzw. für pneumatischen Überdruck aufweisen, die im Bereich der Handhabungseinrichtung zu der Leitung 22 zusammengeführt und durch nicht dargestellte Steuerorgane wie Ventile, Klappen und dergleichen, in Strömungsverbindung mit der genannten einen Leitung 22 bringbar sind. Wenn die genannte Leitung 22 mit pneumatischem Überdruck beaufschlagt wird, so treten Verspannungen bei der Leitung 22 auf, und zwar jedenfalls dann, wenn die Leitung 22 in zweckmäßiger Weise für die Führung von Unterdruck dimensioniert ist, also beispielsweise einen Innendurchmesser von 10 mm und mehr, insbesondere von wenigstens 14 mm oder von wenigstens 16 mm aufweist. Diese Verspannungen der genannten Leitung 22 können sich auf die Handhabungseinrichtung 4 und auf die lasttragende Verbindung 16 und damit auch auf den Kraftsensor 18 auswirken und ein Sensorsignal des Kraftsensors 18 verfälschen.

Um diesem Problem entgegenzuwirken, wird ein Korrekturwert für ein Signal des Kraftsensors 18 ermittelt, und das Signal des Kraftsensors wird um diesen Korrekturwert korrigiert, so wie dies eingangs beschrieben wurde. Hierfür kann nach einer bevorzugt und beispielhaft dargestellten Ausführungsform ein Drucksensor 26 zur Ermittlung des im Inneren der besagten Leitung 22 herrschenden Drucks p vorgesehen werden. Mittels des Drucksensors 26 kann der Druck im Inneren der besagten Leitung 22 als Verspannungsparameter ermittelt werden und zur Ermittlung des Korrekturwerts für das Signal des Kraftsensors 18 verwendet werden. Hierfür wird ein Signal des Drucksensors 26 an die Steuereinrichtung 20 gegeben, und dort wird insbesondere auf die eingangs beschriebene Weise ein Korrekturwert ermittelt. Dieser Korrekturwert wird zur Korrektur des Signals des Kraftsensors 18 verwendet, so dass dann ein korrigiertes Signal des Kraftsensors 18 durch die Steuereinrichtung 20 zur weiteren Steuerung des Betriebs der Hebevorrichtung 2 eingesetzt werden kann.

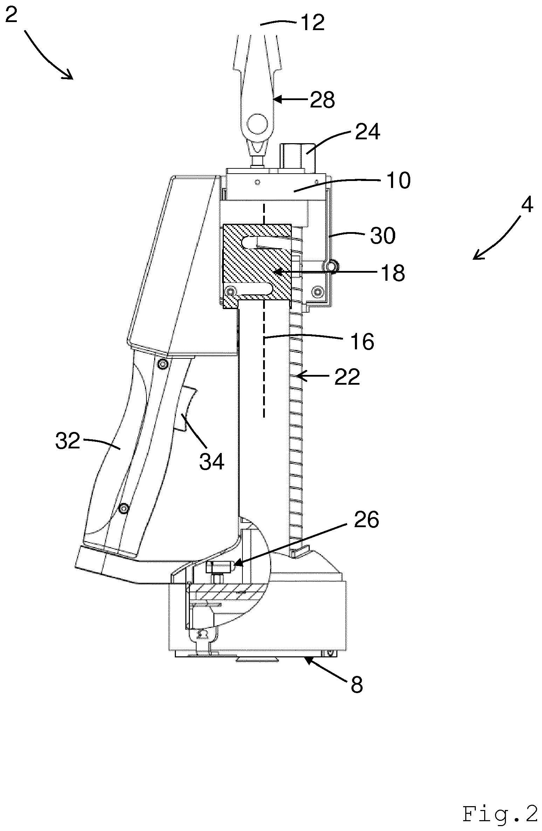

Figur 2 zeigt eine Seitenansicht der manuell führbaren Handhabungseinrichtung 4, bei der in teilweise aufgerissener Darstellung auch Gehäusekomponenten der Handhabungseinrichtung 4 dargestellt sind. Es wurden die Bezugszeichen der Komponenten nach Figur 1 verwendet. Demnach ist die Schnittstelle 10 zu dem Tragstrang 12 bzw. zu einer Aufhängevorrichtung 28 des Tragstrangs dargestellt. An dieser Schnittstelle 10 ist auch der Anschluss 24 für die Unterdruckzuführung bzw. Zuführung von pneumatischem Überdruck nach außen mündend vorgesehen. Es sind gehäusebildende Komponenten 30 dargestellt, welche die Handhabungsvorrichtung 4 von der oberen Schnittstelle 10 bis zu der Greif- oder Ansaugbasis 8 umgeben. Im beispielhaft dargestellten Fall kann an der Greif- oder Ansaugbasis 8 beispielsweise ein Saugteller oder sogenannter Sauggreifer (nicht dargestellt) angebracht werden. Es wäre aber auch die Anbringung an sich beliebiger insbesondere pneumatisch steuerbarer Greiforgane, wie ein Ejektor, eine Fingergreifeinrichtung, eine ausfahrbare oder aktivierbare Magnetgreifeinrichtung oder dergleichen denkbar. Wie in der schematischen Darstellung nach Figur 1 erstreckt sich die besagte Leitung 22 im Wesentlichen parallel zu dem Kraftsensor 18. Der Kraftsensor 18 ist in einer im Inneren der Gehäusekomponenten parallel zu der Leitung 22 erstreckten lasttragenden und beispielhaft im wesentlichen linear erstreckten Verbindung 16 zwischen der oberen Schnittstelle 10 und der Greif- oder Ansaugbasis 8 angeordnet.

Weiter ist ein Handgriff 32 mit einem manuell bedienbaren Betätigungsorgan 34 in ergonomisch umgreifbarer Weise an der Handhabungseinrichtung 4 außen angeordnet und erstreckt sich beispielhaft geringfügig zur Vertikalen geneigt. Mittels des Drucksensors 26 wird ein Druck im Inneren der besagten Leitung 22 gemessen, und ein Signal dieses Drucksensors 26 wird an die Steuereinrichtung 20 gegeben und in der beschriebenen Weise verarbeitet.

## Patentansprüche

1. Verfahren zum Betreiben einer Hebevorrichtung (2),
wobei die Hebevorrichtung (2) eine manuell führbare Handhabungseinrichtung (4) umfasst, mittels derer ein anzuhebender Gegenstand (6) an einer Ansaugseite der Handhabungseinrichtung (4) ansaugbar oder in sonstiger Weise, insbesondere durch pneumatisch betätigte Mittel, greifbar ist,
wobei die Handhabungseinrichtung (4) über eine Hebeeinrichtung (14) mit einem Tragstrang (12) anhebbar und absenkbar ist,
wobei zu der Handhabungseinrichtung (4) pneumatischer Überdruck oder wahlweise Unterdruck oder pneumatischer Überdruck zuführbar ist,
wobei innerhalb der Handhabungseinrichtung (4) eine Leitung (22) vorgesehen ist, in welcher zumindest zeitweise pneumatischer Überdruck geführt wird,
wobei bei der Handhabungseinrichtung (4) ein Kraftsensor (18) verwendet wird, insbesondere um eine Belastung des Tragstrangs (12) und/oder der Handhabungseinrichtung (4) insbesondere beim Anheben und Absenken eines Gegenstands (6) zu messen,
**dadurch gekennzeichnet, dass** eine Verspannung der besagten Leitung (22) infolge von Zuführung von pneumatischem Überdruck und deren Auswirkung auf ein Signal des Kraftsensors (18) berücksichtigt wird, indem ein Korrekturwert (Fkor) für ein Signal (Fsens) des Kraftsensors (18) ermittelt wird und das Signal (Fsens) des Kraftsensors (18) um diesen Korrekturwert (Fkor) korrigiert wird, so dass ein korrigiertes Signal (Fsens-kor) erhalten und der weiteren Steuerung des Betriebs zugrunde gelegt wird.

2. Verfahren nach Anspruch 1, **dadurch gekennzeichnet, dass** der Korrekturwert ermittelt wird, indem ein Verspannungsparameter ermittelt wird, welcher in die Ermittlung des Korrekturwerts (Fkor) eingeht.

3. Verfahren nach Anspruch 2, **dadurch gekennzeichnet, dass** der Verspannungsparameter ein im Inneren der besagten Leitung (22) herrschender Druck ist.

4. Verfahren nach Anspruch 3, **dadurch gekennzeichnet, dass** der Korrekturwert (Fkor) ermittelt wird aus dem Produkt des im Inneren der besagten Leitung (22) herrschenden Drucks p und aus einem für eine betreffende Hebevorrichtung (2) festgelegten oder festlegbaren Korrekturfaktor (f).

5. Verfahren nach Anspruch 3, **dadurch gekennzeichnet, dass** der Korrekturwert (Fkor) ermittelt wird aus dem Produkt des im Inneren der besagten Leitung (22) herrschenden Drucks (p) und aus der Querschnittsfläche (A) der besagten Leitung (22) und aus einem für eine betreffende Hebevorrichtung (2) festgelegten oder festlegbaren Korrekturfaktor (f).

6. Verfahren nach einem oder mehreren der vorstehenden Ansprüche, **dadurch gekennzeichnet, dass** der Kraftsensor (18) zwischen einer oberen Schnittstelle (10) der Handhabungseinrichtung (4) zu dem Tragstrang (12) und einer dem anzuhebenden Gegenstand (6) zugewandten Greif- oder Ansaugbasis (8) der Handhabungseinrichtung (4) angeordnet ist und wobei die besagte Leitung (22) ebenfalls zwischen der oberen Schnittstelle (10) und der Greif- oder Ansaugbasis (8) der Handhabungseinrichtung (4) verläuft.

7. Verfahren nach einem oder mehreren der vorstehenden Ansprüche, **dadurch gekennzeichnet, dass** der Kraftsensor (18) als lasttragendes Glied verwendet wird.

8. Hebevorrichtung (2) eingerichtet zur Durchführung des Verfahrens nach einem oder mehreren der vorstehenden Ansprüche, mit einer Handhabungseinrichtung (4), mittels derer ein anzuhebender Gegenstand (6) an einer Ansaugseite der Handhabungseinrichtung (4) ansaugbar oder in sonstiger Weise durch pneumatisch betätigte Mittel greifbar ist,
mit einer Hebeeinrichtung (14) mit einem Tragstrang (12), wobei die Handhabungseinrichtung (4) über eine Schnittstelle (10) mit dem Tragstrang (12) verbindbar ist, so dass sie anhebbar und absenkbar ist,
wobei zu der Handhabungseinrichtung (4) pneumatischer Überdruck oder wahlweise Unterdruck oder pneumatischer Überdruck zuführbar ist,
wobei innerhalb der Handhabungseinrichtung (4) eine Leitung (22) vorgesehen ist, in welcher zumindest zeitweise pneumatischer Überdruck führbar ist oder in welcher je nach Bedarf Unterdruck oder pneumatische Überdruck führbar ist,
wobei bei der Handhabungseinrichtung (4) ein Kraftsensor (18) vorgesehen ist, insbesondere um eine Belastung des Tragstrangs (12) und/oder der Handhabungseinrichtung (4) insbesondere beim Anheben und Absenken eines Gegenstands (6) zu messen,
und wobei eine elektrische oder elektronische Steuereinrichtung (20) vorgesehen ist, zur Steuerung des Betriebs der Hebeeinrichtung (14) und der Handhabungseinrichtung (4) zur Umsetzung und Ausführung von Steuerungsmaßnahmen einer Bedienperson, **dadurch gekennzeichnet, dass** die Steuereinrichtung (20) dazu ausgebildet ist, eine Verspannung der besagten Leitung (22) infolge von Zuführung von pneumatischem Überdruck und deren Auswirkung auf ein Signal des Kraftsensors (18) zu berücksichtigen, indem ein Korrekturwert (Fkor) für ein Signal (Fsens) des Kraftsensors (18) ermittelt und das Signal (Fsens) des Kraftsensors (18) um diesen Korrekturwert (Fkor) korrigiert wird, so dass ein korrigiertes Signal (Fsens-kor) erhalten und der weiteren Steuerung des Betriebs zugrunde gelegt wird.

9. Hebevorrichtung nach Anspruch 8, **dadurch gekennzeichnet, dass** der Kraftsensor (18) ein lasttragendes Glied bildet und zwischen einer oberen Schnittstelle (10) der Handhabungseinrichtung (4) zu dem Tragstrang (12) und einer dem anzuhebenden Gegenstand (6) zugewandten Greif- oder Ansaugbasis (8) der Handhabungseinrichtung (4) angeordnet ist und dass die besagte Leitung (22) ebenfalls zwischen der oberen Schnittstelle (10) und der Greif- oder Ansaugbasis (8) der Handhabungseinrichtung verläuft.

10. Hebevorrichtung nach Anspruch 9, **dadurch gekennzeichnet, dass** die besagte Leitung (22) einen Innendurchmesser von wenigstens 10 Millimeter, insbesondere wenigstens 12 Millimeter, insbesondere wenigstens 14 Millimeter, und weiter insbesondere wenigstens 16 Millimeter aufweist.

11. Hebevorrichtung nach Anspruch 8 oder 9, **gekennzeichnet durch** einen mit der Steuereinrichtung (20) zusammenwirkenden Sensor zur Ermittlung eines Verspannungsparameters bei der besagten Leitung (22) oder bei Komponenten der Handhabungseinrichtung jeweils infolge von Zuführung von pneumatischem Überdruck zu der besagten Leitung (22).

12. Hebevorrichtung nach Anspruch 8, 9 oder 10, **dadurch gekennzeichnet, dass** ein mit der Steuereinrichtung (20) zusammenwirkender Drucksensor (26) zur Ermittlung eines Drucks im Inneren der besagten Leitung (22) vorgesehen ist.

13. Hebevorrichtung nach einem oder mehreren der vorstehenden Ansprüche 8-12, **dadurch gekennzeichnet, dass** deren Handhabungseinrichtung (4) ein manuell bedienbares Betätigungsorgan (34), insbesondere bei einem manuell greifbaren Handgriff (32) der Handhabungseinrichtung (4), aufweist, um Steuerungsmaßnahmen vornehmen zu können.
